# EUROPEAN PATENT APPLICATION

(11) **EP 0 637 124 A1**
(43) Date of publication of application: **01.02.1995**
(21) Application number: 93305880.2
(22) Date of filing: 26.07.1993
(51) Int. Cl.: H02P 5/178

(54) **Limiting control for controllable shunt field winding of a compound motor**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The present compound motor limiting control circuit for controllable shunt field winding by means of controlling field winding with limiting switch relates to a shunt field winding of compound motor which is controlled by means of a limiting switch controlled with the operating state of motor, and particularly to the control with over-speed close type limiting switch which gets closed during motor running speed is overhigh whereby the assisted exciting type shunt winding of compound motor is excited while motor running speed is reduced thereof; while motor is running at low speed the limiting switch appears closed state. Further the action point of the limiting switch can be controlled to change the motor running speed.

## Description

### SUMMARY OF THE INVENTION

The present compound motor limiting control circuit for controllable shunt field winding by means of controlling field winding with limiting switch relates to a shunt field winding of compound motor which is controlled by means of a limiting switch controlled with the operating state of motor, and particularly to the control with over-speed close type limiting switch which gets closed during motor running speed is overhigh whereby the assisted exciting type shunt winding of compound motor is excited while motor running speed is reduced thereof; while motor is running at low speed the limiting switch appears closed state. Further the action point of the limiting switch can be controlled to change the motor running speed.

### BRIEF DESCRIPTION OF THE DRAWINGS

FIG. 1 is an embodiment showing the compound motor limiting control circuit for controllable shunt field winding by means of controlling the field winding with limiting switch.

FIG 2 is an embodiment showing the compound motor limiting control circuit for controllable shunt field winding by means of controlling the field with centrifugal switch.

FIG 3 is an embodiment showing the compound motor limiting control circuit for controllable shunt field winding by means of controlling the field winding with limiting switch consisted of solid power transistor.

### DETAILED DESCRIPTION OF THE INVENTION

The conventional series motor limiting control usually relates to a centrifugal switch series between the power supply and series motor in which the centrifugal switch will cut off power supply during over-speed condition and the switch will close while the speed is reduced to obtain a speed limiting function thereof. Besides, as each cut-off power involves the full power of motor so the motor capacity is greatly limited. The present compound motor limiting control circuit for controllable shunt field winding by means of controlling field winding with limiting switch relates to a shunt field winding of compound motor which is controlled by means of a limiting switch controlled with the operating state of motor, and particularly to the control with over-speed close type limiting switch which gets closed during motor running speed is overhigh whereby the assisted exciting type shunt winding of compound motor is excited while motor running speed is reduced thereof; while motor is running at low speed the limiting switch appears closed state. Further the action point of the limiting switch can be controlled to change the motor running speed.

The limiting switch of the present design includes: (1) solid or mechano-electronic switch controlled by a motor speed-sensing device; (2) motor EMF sensing control; (3) motor armature current control; (4) centrifugal type switch sensing control.

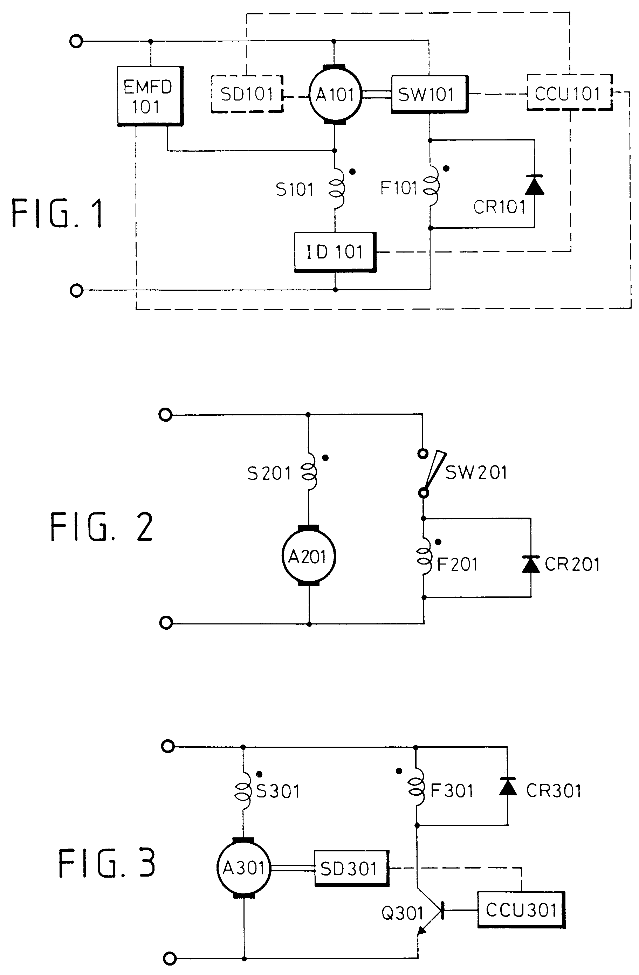

Each embodiment of the present invention is described as below:
Referring to FIG. 1, it is a diagram of basic principle showing compound motor limiting control circuit for controllable shunt field winding by means of controlling field winding with limiting switch, comprising:
a series field winding S101 and armature A101 of compound motor mutually series and parallel connected to the power supply;
a limiting switch device SW101 consisted of mechano-electronic or solid type switch controlled with motor centrifugal force or CCU101 with reference to motor loading current, running speed or armature EMF, which is series with the shunt field winding F101 of compound motor and then parallel connected to the both ends of series field with armature to appear long compound, or directly parallel connected to the armature to appear short compound; the aforesaid series field winding and shunt field winding both appear assisted compound characteristics of copolarity, CR101 is a flywheel diode parallel connected to the shunt field for absorbing EMF when the limiting switch device SW101 is cut off;
the circuit may further be mounted with motor running speed sensing device SD101 for measuring motor speed and transmitting the data to CCU101 in an analogical or digital form in order to control the limiting device to close or open at due time; or with armature EMF sensing device EMFD101 which is to control the limiting switch device in order to power up the shunt field winding when EMF is rising; or with motor armature current sensing device ID100 which is to control the limiting switch in order to power up the shunt field winding when current is reduced and speed is rising at light load;
CCU101 is consisted of a circuit which is able to setup motor speed value and compare it with actual running speed and an output driving circuit for driving the limiting switch device SW101.

Referring to FIG. 2, it is an embodiment showing the compound motor limiting control circuit for controllable shunt field winding by means of controlling field winding with the centrifugal switch, comprising:
a series field winding S201 and armature A201 of compound motor mutually series and parallel connected to the power supply;
a limiting switch device SW201 consisted of mechano-electronic switch controlled with motor centrifugal force, which is series with the shunt field winding F201 of compound motor and then parallel connected to the both ends of series field with armature to appear long compound, or directly parallel connected to the armature to appear short compound; the aforesaid series field winding and shunt field winding both appear assisted compound characteristics of copolarity, CR201 is a flywheel diode parallel connected to the shunt field for absorbing EMF when the limiting switch device SW201 is cut off;
the aforesaid limiting switch device SW201 driven with centrifugal force, the action point of centrifugal switch can be controlled with the adjustment of mechanism.

Referring to FIG. 3, it is an embodiment showing the compound motor limiting control circuit for controllable shunt field winding by means of controlling the field winding with the limiting switch which is consisted of solid power transistor, comprising:
a series field winding S301 and armature A301 of compound motor mutually series and parallel connected to the power supply;
a limiting switch device Q301 consisted of solid-state switch controlled with CCU301, which is series with the said shunt field winding F301 of compound motor and then parallel connected to the both ends of series field with armature to appear long compound, or directly parallel connected to the armature to appear short compound; the aforesaid series field winding and shunt field winding both appear assisted compound characteristics of copolarity, CR301 is a flywheel diode parallel connected to the shunt field for absorbing EMF when the limiting switch device Q301 is cut off;
the circuit may further be mounted with motor running speed sensing device SD301 for measuring motor speed and transmitting the data to CCU301 in an analogical or digital form in order to control the limiting device to close or open at due time; or with armature EMF sensing device EMFD301 which is to control the limiting switch device in order to power up the shunt field winding when EMF is rising; or with motor armature current sensing device ID300 which is to control the limiting switch in order to power up the shunt field winding when current is reduced and speed is rising at light load;
CCU301 is consisted of a circuit which is able to setup motor speed value and compare it with actual running speed and an output driving circuit for driving the limiting switch device Q301.

To conclude the above statement, the compound motor limiting control circuit for controllable shunt field winding by means of controlling the field winding with the limiting switch provides an improved design with endurable life span and larger controllable capacity, and its novelty, reasonable means for the circuit and utility of element are quite clear, please examine it in accordance with the law.

## Claims

1. A compound motor limiting control circuit for controllable shunt field winding by means of controlling field winding with limiting switch relates to a shunt field winding of compound motor which is controlled by means of a limiting switch controlled with the operating state of motor, and particularly to the control with over-speed close type limiting switch which gets closed during motor running speed is overhigh whereby the assisted exciting type shunt winding of compound motor is excited while motor running speed is reduced thereof; while motor is running at low speed the limiting switch appears closed state. Further the action point of the limiting switch can be controlled to change the motor running speed.

2. The compound motor limiting control circuit for controllable shunt field winding by means of controlling field winding with limiting switch according to claim 1 wherein the limiting switch including: (1) solid or mechano-electronic switch controlled by a motor speed-sensing device; (2) motor EMF sensing control; (3) motor armature current control; (4) centrifugal type switch sensing control.

3. The compound motor limiting control circuit for controllable shunt field winding by means of controlling field winding with limiting switch according to claim 1, comprising:
a series field winding S101 and armature A101 of compound motor mutually series and parallel connected to the power supply;
a limiting switch device SW101 consisted of mechano-electronic or solid type switch controlled with motor centrifugal force or CCU101 with reference to motor loading current, running speed or armature EMF, which is series with the shunt field winding F101 of compound motor and then parallel connected to the both ends of series field with armature to appear long compound, or directly parallel connected to the armature to appear short compound; the aforesaid series field winding and shunt field winding both appear assisted compound characteristics of copolarity, CR101 is a flywheel diode parallel connected to the shunt field for absorbing EMF when the limiting switch device SW101 is cut off;
the circuit may further be mounted with motor running speed sensing device SD101 for measuring motor speed and transmitting the data to CCU101 in an analogical or digital form in order to control the limiting device to close or open at due time; or with armature EMF sensing device EMFD101 which is to control the limiting switch device in order to power up the shunt field winding when EMF is rising; or with motor armature current sensing device ID100 which is to control the limiting switch in order to power up the shunt field winding when current is reduced and speed is rising at light load;
CCU101 is consisted of a circuit which is able to setup motor speed value and compare it with actual running speed and an output driving circuit for driving the limiting switch device SW101.

4. The compound motor limiting control circuit for controllable shunt field winding by means of controlling field winding with limiting switch according to claim 1, comprising:
a series field winding S201 and armature A201 of compound motor mutually series and parallel connected to the power supply;
a limiting switch device SW201 consisted of mechano-electronic switch controlled with motor centrifugal force, which is series with the shunt field winding F201 of compound motor and then parallel connected to the both ends of series field with armature to appear long compound, or directly parallel connected to the armature to appear short compound; the aforesaid series field winding and shunt field winding both appear assisted compound characteristics of copolarity, CR201 is a flywheel diode parallel connected to the shunt field for absorbing EMF when the limiting switch device SW201 is cut off;
the aforesaid limiting switch device SW201 driven with centrifugal force, the action point of centrifugal switch can be controlled with the adjustment of mechanism.

5. The compound motor limiting control circuit for controllable shunt field winding by means of controlling field winding with limiting switch according to claim 1, further including:
a series field winding S301 and armature A301 of compound motor mutually series and parallel connected to the power supply;
a limiting switch device Q301 consisted of solid-state switch controlled with CCU301, which is series with the said shunt field winding F301 of compound motor and then parallel connected to the both ends of series field with armature to appear long compound, or directly parallel connected to the armature to appear short compound; the aforesaid series field winding and shunt field winding both appear assisted compound characteristics of copolarity, CR301 is a flywheel diode parallel connected to the shunt field for absorbing EMF when the limiting switch device Q301 is cut off;
the circuit may further be mounted with motor running speed sensing device SD301 for measuring motor speed and transmitting the data to CCU301 in an analogical or digital form in order to control the limiting device to close or open at due time; or with armature EMF sensing device EMFD301 which is to control the limiting switch device in order to power up the shunt field winding when EMF is rising; or with motor armature current sensing device ID300 which is to control the limiting switch in order to power up the shunt field winding when current is reduced and speed is rising at light load;
CCU301 is consisted of a circuit which is able to setup motor speed value and compare it with actual running speed and an output driving circuit for driving the limiting switch device Q301.
